# EUROPEAN PATENT APPLICATION

(11) **EP 3 611 648 A1**
(43) Date of publication of application: **19.02.2020**
(21) Application number: 19191440.7
(22) Date of filing: 13.08.2019
(51) Int. Cl.: G06F 21/77, G06K 19/073, H04L 9/32

(54) **IC CARD AND METHOD OF CONTROLLING IC CARD**

(30) Priority: 17.08.2018 JP 2018153381
(71) Applicant: Kabushiki Kaisha Toshiba, Minato-ku Tokyo 105-0023 (JP); Toshiba Energy Systems & Solutions Corporation, Saiwai-ku Kawasaki-shi Kanagawa (JP)
(72) Inventor: Okuno, Tomotaka, Kanagawa (JP)
(74) Representative: Hoffmann Eitle

(57) **Abstract**

An IC card and a method of controlling the IC card which can improve convenience are provided.

An IC card of embodiments includes a communicator, a storage and an authentication processor. The communicator performs communication with a terminal device. The storage stores authentication information for authenticating a user. The authentication processor performs personal authentication on the basis of input information received from the terminal device through the communicator and authentication information stored in the storage. In addition, the authentication processor extends an authentication processing time until completion of authentication becomes possible again on the basis of the number of times of the personal authentication having failed.

## Description

### CROSS-REFERENCE TO RELATED APPLICATION

This application is based upon and claims the benefit of priority from Japanese Patent Application No. 2018-153381, filed August 17, 2018; the entire contents of which are incorporated herein by reference.

### Field

Embodiments described herein relate generally to an IC card and a method of controlling the IC card.

### BACKGROUND

Recently, IC cards in which integrated circuit (IC) chips having a card user authentication function has been embedded have become known. Such IC cards have functions for blocking brute-force attacks on personal identification numbers (PINs) and encryption keys. Functions for blocking brute-force attacks include a function of setting an upper limit of the number of times of trials of authentication and prohibiting use when the number of times of trials of authentication has reached the upper limit and a function of extending the time until the next authentication can be completed when authentication has failed. However, there are cases in which both these functions impair user convenience.

### BRIEF DESCRIPTION OF THE DRAWINGS

FIG. 1 is an external view showing an example of an IC card 1 of embodiments.
FIG. 2 is a diagram showing an example of a hardware configuration of the IC card 1 of embodiments.
FIG. 3 is a block diagram showing an example of a functional configuration of the IC card 1 of embodiments.
FIG. 4 is a diagram showing an example of an authentication result stored in an authentication result storage 84 of embodiments.
FIG. 5 is a diagram showing an example of waiting time information stored in a waiting time information storage 85 of embodiments.
FIG. 6 is a flowchart showing a first embodiment of authentication processing performed by the IC card 1.
FIG. 7 is a flowchart showing a second embodiment of authentication processing performed by the IC card 1.
FIG. 8 is a flowchart showing a third embodiment of authentication processing performed by the IC card 1.

### DETAILED DESCRIPTION

An IC card and a method of controlling the IC card which can improve convenience are provided. An IC card of embodiments includes a communicator, a storage and an authentication processor. The communicator performs communication with a terminal device. The storage stores authentication information for authenticating a user. The authentication processor performs personal authentication on the basis of input information received from the terminal device through the communicator and authentication information stored in the storage. In addition, the authentication processor extends an authentication processing time until completion of authentication becomes possible again on the basis of the number of times of the personal authentication having failed.

In addition, the authentication processor increases an authentication prohibition time period if the authentication processor failed to perform personal authentication. The authentication processor is prohibited to perform personal authentication in the authentication prohibition time period. The authentication prohibition time period starts at a time that the authentication processor failed to perform personal authentication.

In addition, the authentication processor sets the authentication prohibition time period if the authentication processor failed to perform personal authentication in the absence of the authentication prohibition time period which is set.

In addition, the authentication processor sets a first authentication prohibition time period if the authentication processor failed to perform personal authentication in the absence of the first authentication prohibition time period which is set. The authentication processor replaces the first authentication prohibition time period by a second authentication prohibition time period if the authentication processor failed to perform personal authentication in the presence of the first authentication prohibition time period which is set. The second authentication prohibition time period is longer than the first authentication prohibition time period.

Hereinafter, an IC card and a method of controlling the IC card of embodiments will be described with reference to the drawings.

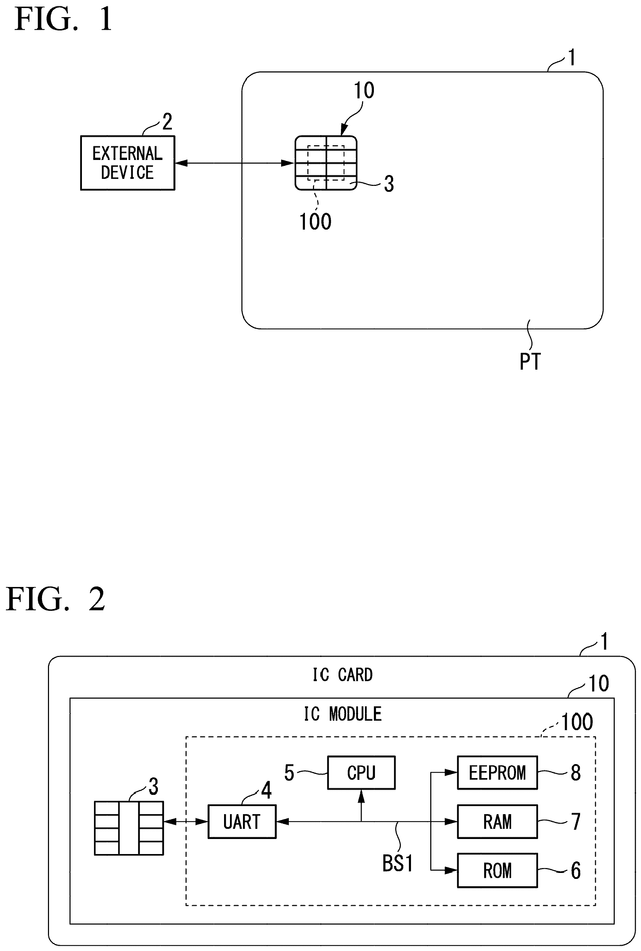

FIG. 1 is an external view showing an example of an IC card 1 of embodiments. As shown in FIG. 1, the IC card 1 includes an IC module 10. The IC module 10 includes a contact part 3 and an IC chip 100 embedded therein.

The IC card 1 is formed by mounting the IC module 10 in a plastic card base PT (an example of a card body), for example. That is, the IC card 1 includes the IC module 10 and the card base PT in which the IC module 10 has been embedded. In addition, the IC card 1 can communicate with an external device 2 through the contact part 3.

For example, the IC card 1 receives a command (a processing request) transmitted from the external device 2 through the contact part 3 and executes processing (command processing) in response to the received command. Then, the IC card 1 transmits a response (processing response) that is an execution result of the command processing to the external device 2 through the contact part 3.

The external device 2 is a device communicating with the IC card 1 and is a terminal device or the like which includes a reader/writer device, for example. The external device 2 transmits a command and other input information (e.g., a PIN and an encryption key) input by a card user to the IC card 1 and performs processing such as reading, writing, updating, and the like of data stored in the IC card on the basis of a received response.

The IC module 10 is a module that includes the contact part 3 and the IC chip 100 and is handled in the form of a chip on tape (COT) having a plurality of IC modules 10 disposed on a tape, or the like, for example. Meanwhile, there is a case in which a single IC module 10 individually separated from a tape is referred to as a COT.

The contact part 3 has terminals for various signals necessary for the IC card 1 to operate. Here, the terminals for various signals include a terminal through which a supply of a power supply voltage, a clock signal, a reset signal and the like from the external device 2 is received, and a serial data input/output terminal (SIO terminal) for communicating with the external device 2. For example, the IC chip 100 is a large scale integration (LSI) chip such as a one-chip microprocessor, or the like.

Next, a hardware configuration of the IC card 1 of embodiments will be described with reference to FIG. 2. FIG. 2 is a diagram showing an example of a hardware configuration of the IC card 1 of embodiments. As shown in FIG. 2, the IC card 1 has the IC module 10 including the contact part 3 and the IC chip 100. In addition, the IC chip 100 includes a universal asynchronous receiver transmitter (UART) 4, a CPU 5, a read only memory (ROM) 6, a random access memory (RAM) 7, and an electrically erasable programmable ROM (EEPROM) 8. Further, the components 4 to 8 are connected through an internal bus BS1.

The UART 4 performs serial data communication with the external device 2 through the aforementioned SIO terminal. The UART 4 outputs data (e.g., 1-byte data) obtained by performing parallel conversion on a serial data signal received through the SIO terminal to the internal bus BS1. In addition, the UART 4 performs serial conversion on data acquired through the internal bus BS1 and outputs the converted data to the external device 2 through the SIO terminal. For example, the UART 4 receives a command from the external device 2 through the SIO terminal. In addition, the UART 4 transmits a response to the external device 2 through the SIO terminal.

The CPU 5 performs various types of processing of the IC card 1 by executing programs stored in the ROM 6 or the EEPROM 8. For example, the CPU 5 executes command processing in response to a command received by the UART 4 through the contact part 3.

The ROM 6 is a nonvolatile memory such as a mask ROM, for example, and stores programs for executing various types of processing of the IC card 1 and data such as a command table. The RAM 7 is a volatile memory such as a static RAM (SRAM), for example, and temporarily stores data used when various types of processing of the IC card 1 are performed. The EEPROM 8 is an electrically rewritable nonvolatile memory, for example. The EEPROM 8 stores various types of data used by the IC card 1. For example, the EEPROM 8 stores information used for various services (applications) using the IC card 1.

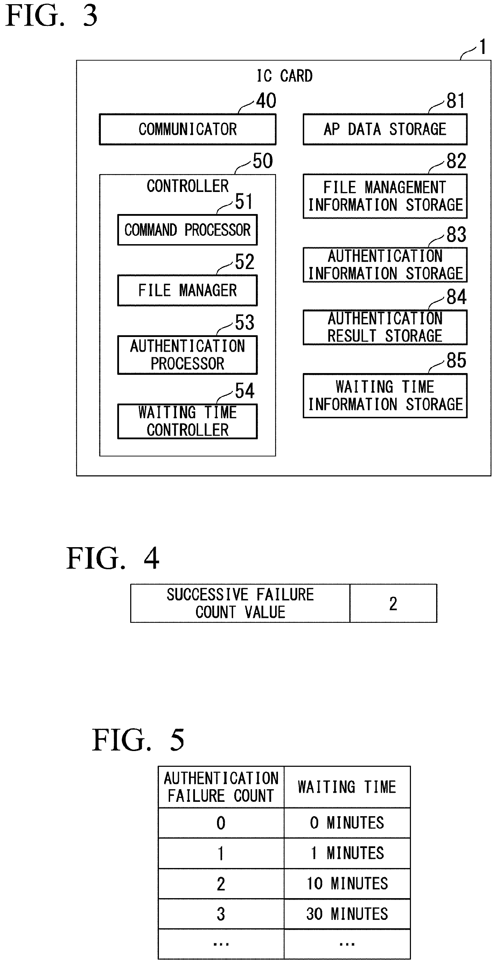

Next, an example of a functional configuration of the IC card 1 according to embodiments will be described with reference to FIG. 3.

FIG. 3 is a block diagram showing an example of a functional configuration of the IC card 1 of embodiments. As shown in FIG. 3, the IC card 1 includes, for example, a communicator 40, a controller 50, an AP data storage 81, a file management information storage 82, an authentication information storage 83, an authentication result storage 84, and a waiting time information storage 85. In addition, the controller 50 is realized by the CPU 5, the RAM 7 and the ROM 6 or the EEPROM 8, for example, and integrally controls the IC card 1. The controller 50 includes a command processor 51, a file manager 52, an authentication processor 53, and a waiting time controller 54, for example. Here, each component of the IC card 1 shown in FIG. 3 is realized using the hardware of the IC card 1 shown in FIG. 2.

The communicator 40 is realized by a set of electronic devices, for example, the UART 4, the CPU 5 and a program stored in the ROM 6, and transmits and receives commands and responses to/from the external device 2, for example, through the contact part 3. That is, the communicator 40 receives a command (processing request) for requesting predetermined processing from the external device 2 and transmits a response (processing response) for the command to the external device 2.

The AP (application) data storage 81 is a storage configured by the EEPROM 8, for example, and stores various types of data used in applications. In the AP data storage 81, files such as a master file (MF), a dedicated file (DF), and an elementary file (EF) are stored in a hierarchical structure in a predetermined data region. Meanwhile, EFs are managed such that they can be identified using identification information (hereinafter, EFID), and data (specific data) in a tag-length-value (TLV) format, for example, is stored in each EF. That is, the AP data storage 81 stores files including data in the TLV format. The specific data includes personal information such as the "name," "address," "data of birth," "age" and "telephone number" of a user, information that can be accessed only by a specific authorized person (e.g., a card user who has successfully performed personal authentication), and other information. Further, this information may be encrypted such that it can be decrypted on the basis of decryption key information and stored.

The file management information storage 82 is a storage configured by the EEPROM 8, for example, and stores management information (e.g., directory information) that manages the aforementioned various files. For example, the file management information storage 82 correlates file identification information such as a file name and a file ID with an address of the head of a file (hereinafter referred to as a head address of a file) and stores the correlated information. Here, a head address of a file is a physical address of the EEPROM 8. When selection of each file or processing of accessing each file is executed in in the IC card 1, selection of each file or processing of accessing each file is executed on the basis of file management information stored in the file management information storage 82. Here, access processing is processing of reading, writing, updating and the like of data.

The authentication information storage 83 is a storage configured by the EEPROM 8, for example, and stores a PIN (hereinafter referred to as an authentication PIN) which is a password for authenticating a card user.

An authentication PIN is an example of authentication information. Further, the authentication information storage 83 may store security information for executing encryption processing and decryption processing. For example, the security information includes a program for executing encryption processing and decryption processing and key information (e.g., an encryption key such as a common key) for executing encryption processing and decryption processing.

The authentication result storage 84 is a storage configured by the EEPROM 8, for example, and stores a user authentication result obtained through the authentication processor 53. FIG. 4 is a diagram showing an example of an authentication result stored in the authentication result storage 84 of embodiments. As shown in FIG. 4, the authentication result storage 84 stores a value (hereinafter referred to as a successive failure count value) obtained by counting the number of times of successive authentication failures through the authentication processor 53. The successive failure count value is reset by the authentication processor 53 when authentication has been successfully performed. Further, the authentication result storage 84 may be a storage configured by the RAM 7, for example. In such a case, the authentication result storage 84 stores successive failure counts while power is supplied to the IC card 1.

The waiting time information storage 85 is a storage configured by the EEPROM 8, for example, and stores information on a waiting time until authentication can be completed again after authentication has failed. FIG. 5 is a diagram showing an example of waiting time information stored by the waiting time information storage 85 of embodiments.

As shown in FIG. 5, the waiting time information storage 85 stores a table in which authentication failure counts are correlated with waiting times as waiting time information. When an authentication failure count is identified, the waiting time controller 54 acquires a waiting time corresponding to the authentication failure count from the table. The table is set such that a waiting time increases as an authentication failure count increases. For example, the duration of a waiting time may be set in proportion to the authentication failure count or may be set such that a change in the waiting time increases in proportion to the authentication failure count. However, when the waiting time has reached an upper limit, the waiting time may be fixed to the upper limit value.

Further, a minimum value of the waiting time is set to a value at which an expected value of a time taken to successfully perform a brute-force attack on an authentication PIN or an encryption key by an attacker (third party) is not attractive to the attacker, for example. In addition, the waiting time is set to be close to a boundary value at which a cost until an authentication PIN or an encryption key can be identified by a brute-force attack becomes higher than the value of information that can be used after the authentication PIN or encryption key has been identified, for example. Further, a maximum value of the waiting time is set depending on the frequency of use of the IC card 1. For example, a maximum value of the waiting time of the IC card 1 estimated to be required to use daily is set to be less than 24 hours (one day).

The command processor 51 executes processing of various commands (command processing) in response to commands (processing requests) transmitted from the external device 2 to the IC card 1. For example, the command processor 51 executes command processing in response to a command received from the external device 2 through the communicator 40. Further, the command processor 51 transmits a response that is a result of command processing to the external device 2 through the communicator 40.

For example, the command processor 51 causes the authentication processor 53 to perform authentication processing when a command received from the external device 2 is a command (e.g., VERIFY command) for performing authentication processing such as identification verification. In addition, the command processor 51 causes the file manager 52 to perform management of accessing files when a command received from the external device 2 is an access processing command for accessing data. The access processing command is a command for executing access processing such as data writing, reading, updating and the like, for example.

The file manager 52 manages files in the AP data storage 81 on the basis of management information (e.g., directory information) stored in the file management information storage 82 for an input access processing command under the control of the command processor 51. The file manager 52 searches management information stored in the file management information storage 82 on the basis of a command parameter to identify a file storage place when file access processing is executed, for example. In addition, the file manager 52 executes access processing such as writing, reading, updating and the like corresponding to a command for an identified file. Meanwhile, when the stored information has been encrypted, the file manager 52 performs decryption processing on the basis of a decryption key included in the command to read decrypted information. Further, when information to be stored needs to be encrypted, encryption is performed using an encryption key stored in the authentication information storage 83.

The authentication processor 53 compares a PIN (hereinafter referred to as an input PIN) included in a command for authentication received through the communicator 40 with an authentication PIN stored in the authentication information storage 83 under the control of the command processor 51 and performs personal authentication of a card user according to whether the input PIN and the authentication PIN correspond to each other. Corresponding to each other is perfect matching, for example. The authentication processor 53 determines that authentication of the card user has been successfully performed when the input PIN and the authentication PIN correspond to each other and determines that authentication of the card user has failed when the input PIN and the authentication PIN do not correspond to each other. In addition, when personal authentication has failed in a previous authentication processing, the authentication processor 53 extends an authentication processing time until authentication can be completed again.

For example, when the input PIN is received from the external device 2, the authentication processor 53 acquires a successive failure count value stored in the authentication result storage 84 and outputs the acquired successive failure count value to the waiting time controller 54 to inquire about a waiting time. When the authentication processor 53 has inquired about a waiting time, the waiting time controller 54 refers to waiting time information stored in the waiting time information storage 85 on the basis of the successive failure count value and acquires a waiting time correlated with an authentication failure count corresponding to the successive failure count value. In the example of FIG. 5, the waiting time controller 54 acquires a waiting time of 1 minute when the successive failure count value is 1 and acquires a waiting time of 10 minutes when the successive failure count value is 2. The waiting time controller 54 outputs the acquired waiting time to the authentication processor 53. The authentication processor 53 extends the authentication processing time on the basis of a time at which the input PIN has been received using the waiting time obtained by the waiting time controller 54.

In addition, the authentication processor 53 increases an authentication prohibition time period if the authentication processor 53 failed to perform personal authentication. The authentication processor 53 is prohibited to perform personal authentication in the authentication prohibition time period. The authentication prohibition time period starts at a time that the authentication processor 53 failed to perform personal authentication.

In addition, the authentication processor 53 sets the authentication prohibition time period if the authentication processor failed to perform personal authentication in the absence of the authentication prohibition time period which is set.

In addition, the authentication processor 53 sets a first authentication prohibition time period if the authentication processor 53 failed to perform personal authentication in the absence of the first authentication prohibition time period which is set. The authentication processor 53 replaces the first authentication prohibition time period by a second authentication prohibition time period if the authentication processor 53 failed to perform personal authentication in the presence of the first authentication prohibition time period which is set. The second authentication prohibition time period is longer than the first authentication prohibition time period. Details of the function of the authentication processor 53 will be described later.

When authentication of the card user has been successfully performed, the authentication processor 53 approves access to a secure region in the AP data storage 81 and switches the region to a state in which predetermined processing can be executed. In addition, the authentication processor 53 transmits authentication result data to the external device 2 through the communicator 40. Further, the authentication processor 53 increments the successive failure count value when it is determined that authentication has failed. In addition, the authentication processor 53 clears the successive failure count value when it is determined that authentication has been successfully performed.

Next, the operation of the IC card 1 of embodiments will be described with reference to the drawings. Meanwhile, description will be made focusing on the function (authentication processing) of the authentication processor 53 in the following processing. Further, it is assumed that the external device 2 and the IC card 1 are connected through the contact part 3 and the IC card 1 is in an active state (when power is supplied) in authentication processing described below, for example.

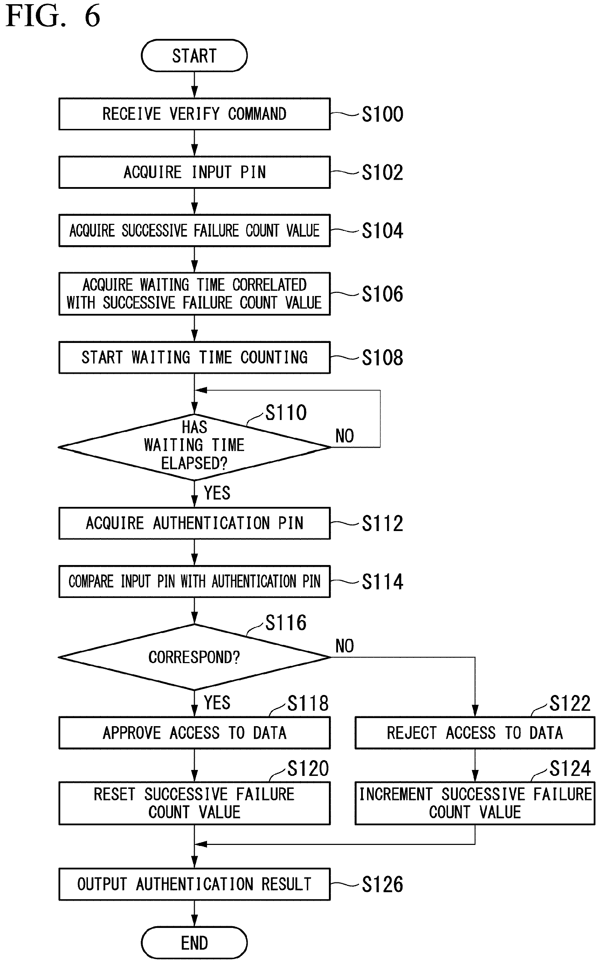

FIG. 6 is a flowchart showing a first embodiment of authentication processing performed by the IC card 1.

In the example of FIG. 6, the command processor 51 receives the VERIFY command in the IC card 1 (step S100) and acquires an input PIN included in the received VERIFY (step S102). Subsequently, the authentication processor 53 acquires a successive failure count value stored in the authentication result storage 84 and inquires a waiting time of the waiting time controller 54 (step S104).

The waiting time controller 54 acquires a waiting time correlated with the successive failure count value and outputs the acquired waiting time to the authentication processor 53 (step S106). The authentication processor 53 starts waiting time counting (step S108) and determines whether the waiting time has elapsed (step S110). The authentication processor 53 waits until the waiting time elapses when the waiting time has not elapsed and acquires the input PIN stored by the authentication information storage 83 when the waiting time has elapsed (step S112). Thereafter, the authentication processor 53 compares the input PIN with the authentication PIN (step S114) and determines whether the input PIN corresponds to the authentication PIN (step S116).

When the input PIN corresponds to the authentication PIN, the authentication processor 53 approves access to data stored in the AP data storage 81 (step S118) and resets the successive failure count value stored in the authentication result storage 84 to 0 (step S120). On the other hand, when the input PIN does not correspond to the authentication PIN, the authentication processor 53 rejects access to data stored in the AP data storage 81 (step S122) and increments the successive failure count value stored in the authentication result storage 84 (step S124). After the process of step S120 or step S124, the authentication processor 53 outputs the authentication result to the external device 2 through the communicator 40 (step S126). Accordingly, processing of this flowchart ends. Meanwhile, the external device 2 which has received the authentication result executes various commands such as data reading, writing, updating and the like when authentication has been successfully performed. When authentication has failed, authentication processing is executed again.

According to the above-described first embodiment of authentication processing, it is possible to extend an authentication processing time until authentication can be completed again because authentication processing using the input PIN and the authentication PIN is performed after a waiting time corresponding to an authentication failure count has elapsed in a case in which a previous authentication has failed when the IC card 1 has received a command used for authentication.

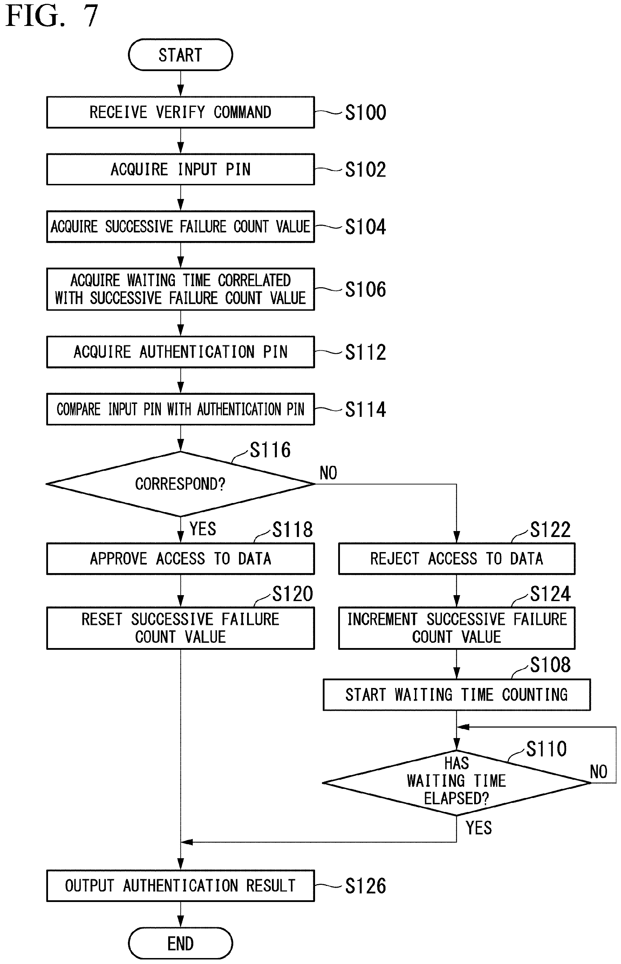

FIG. 7 is a flowchart showing a second embodiment of authentication processing performed by the IC card 1.

The second embodiment of authentication processing shown in FIG. 7 differs from the above-described first embodiment shown in FIG. 6 in that the processes of step S108 and step S110 are performed immediately after the process of step S124, as shown in FIG. 7, instead of being performed immediately before the process of step S112 as shown in FIG. 6. That is, in the second embodiment, the input PIN is compared with the authentication PIN after the VERIFY command is received, waiting time counting is started when the comparison result is transmitted, and an authentication result is output after the waiting time has elapsed. Further, in the second embodiment, the aforementioned processes of step S108 and S110 are in a waiting state only when the input PIN does not correspond to the authentication PIN in a result of comparison between the input PIN and the authentication PIN in the process of step S116.

According to the above-described second embodiment of authentication processing, it is possible to extend an authentication processing time until authentication can be completed again because an authentication result is output after a waiting time corresponding to an authentication failure count has elapsed when a previous authentication has failed. In addition, according to the above-described first and second embodiments of authentication processing, it is possible to prevent brute-force attacks on an input PIN and an encryption key performed by attackers because an authentication processing time can be extended when a previous authentication has failed. Furthermore, a valid card user can perform authentication processing after a waiting time has elapsed even when authentication has failed. Accordingly, it is possible to improve convenience while enhancing security.

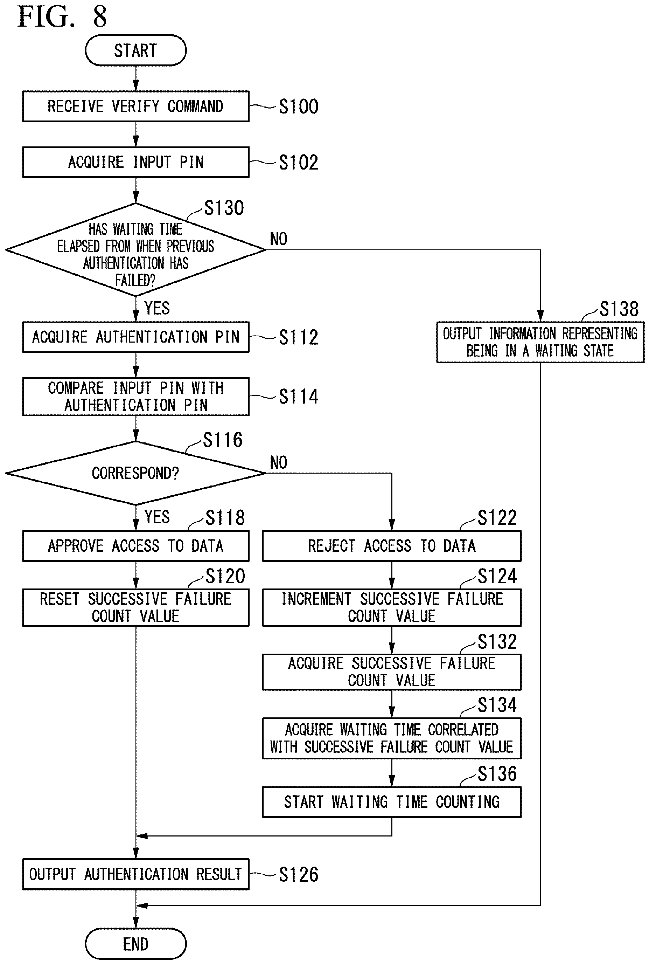

FIG. 8 is a flowchart showing a third embodiment of authentication processing performed by the IC card 1.

In the third embodiment of authentication processing, authentication processing is not performed until the IC card 1 confirms that a predetermined waiting time has elapsed from a previous authentication failure. In addition, the third embodiment of authentication processing shown in FIG. 8 differs from the above-described first embodiment shown in FIG. 6 in that processes of steps S130 to S138 are provided in addition to the processes of steps S100, S102 and S112 to S126. Accordingly, description will be made focusing on the processes of steps S130 to S138 hereinafter.

After the process of step S102, the authentication processor 53 determines whether the waiting time has elapsed from when a previous authentication has failed (step S130). When the waiting time has elapsed from when a previous authentication has failed, the authentication processor 53 performs the processes of steps S112 to S116. In addition, when the input PIN corresponds to the authentication PIN in the process of step S116, the authentication processor 53 performs the processes of steps S118 and S120. On the other hand, when the input PIN does not correspond to the authentication PIN in the process of step S116, the processes of steps S122 and S124 are performed. Thereafter, the authentication processor 53 acquires the successive failure count value stored in the authentication result storage 84 and inquires the waiting time of the waiting time controller 54 (step S132).

The waiting time controller 54 acquires the waiting time correlated with the successive failure count value and outputs the acquired waiting time to the authentication processor 53 (step S134). The authentication processor 53 starts waiting time counting (step S136). Waiting time counting through the process of step S136 is used to determine whether the waiting time has elapsed in the aforementioned process of step S130. Further, the authentication processor 53 outputs the authentication result to the external device 2 through the communicator 40 after the process of step S120 or S136 ends (step S126).

In addition, when the waiting time has not elapsed from when a previous authentication has failed when the VERIFY command is received in the process of step S130, information (e.g., response data or a status word) representing being in a waiting state is output to the external device 2 (step S138). The information representing being in a waiting state includes information about the waiting time, for example. Accordingly, processing of this flowchart ends.

According to the above-described third embodiment of authentication processing, it is possible to output information representing being in a waiting state to the external device 2 without performing authentication processing until the waiting time elapses when the IC card 1 has received the VERIFY command while waiting for a predetermined time in addition to obtaining the same effects as those of the above-described first and second embodiments. Accordingly, the external device 2 can retransmit a command after the waiting time included in the information representing the waiting state has elapsed.

Meanwhile, the IC card 1 cannot count time while power is not supplied thereto. Accordingly, the external device 2 determines whether the IC card 1 is in a state power is supplied thereto, counts time when the IC card 1 is determined to be in a state power is supplied thereto, and retransmits a command at a point time when the waiting time has elapsed. Accordingly, it is possible to retransmit a command at an authentication executable timing.

Here, the aforementioned waiting time controller 54 may automatically change the waiting times of the table shown in FIG. 5 on the basis of at least one of an authentication method for personal authentication performed by the authentication processor 53 and the strength of the encryption key or authentication PIN. For example, the authentication method for personal authentication may include a first authentication method using the aforementioned authentication PIN, a second authentication method of performing personal authentication by carrying out comparison for other information such as a date of birth as well as the authentication PIN, and a third authentication method of performing personal authentication using fingerprint information read through a fingerprint sensor or the like which is not shown. In this case, the second authentication method has higher authentication strength than the first authentication method and the third authentication method has higher authentication strength than the second authentication method. Further, the strength of the encryption key or authentication PIN is a degree corresponding to the length of the key or the length (the number of digits) of the authentication PIN, for example, and the strength decreases as the length decreases and increases as the length increases. Accordingly, the waiting time controller 54 changes a waiting time corresponding to each authentication failure count (1 or more) shown in FIG. 5 such that the waiting time decreases when the second authentication method rather than the first authentication method is used, for example. Further, the waiting time controller 54 changes the waiting time corresponding to each authentication failure count (1 or more) shown in FIG. 5 such that the waiting time increases when the authentication PIN has 4 digits rather than having 10 digits, for example.

In addition, the waiting time controller 54 may change the waiting times of the table shown in FIG. 5 on the basis of a waiting time change request (change command) acquired through the communicator 40. In this case, the waiting time controller 54 receives the waiting time change request from only specific terminals such as a terminal of a card management company, terminals of a card issuer and other specific authorized persons, and the like. Further, the waiting time controller 54 may change the encryption key or the authentication PIN on the basis of an encryption key or authentication PIN change request acquired through the communicator 40.

Moreover, the waiting time controller 54 may change the waiting times in the table depending on a secure degree of data stored in the IC card 1 and the frequency of use acquired from log information. Further, the waiting time controller 54 may allow acquisition of a waiting time on the basis of a predetermined function or logic instead of acquisition of a waiting time corresponding to an authentication failure count using the table shown in FIG. 5. In addition, the waiting time information storage 85 may store a plurality of tables having different relationships between authentication failure counts and waiting times and the waiting time controller 54 may select a table in accordance with the aforementioned conditions during personal authentication instead of changing the waiting times in the table. In this case, the waiting time controller 54 selects a table in which a waiting time increment rate is higher when a secure degree of data stored in the AP data storage 81 is lower.

In this manner, it is possible to further improve convenience by changing a waiting time depending on an authentication method and the strength of an encryption key or authentication PIN or on the basis of a change request from the external device 2.

In addition, the waiting time controller 54 may perform control of resetting a waiting time when a release command has been received from the external device 2. Accordingly, when personal authentication is not performed due to a waiting time although the user wants to urgently use the IC card 1, it is possible to reset the waiting time to immediately perform personal authentication. Meanwhile, the release command can be executed only through a specific terminal such as a terminal of a management company, for example, and can prevent a waiting time from being reset by an attacker.

Further, although an example in which the IC card 1 communicates with the external device 2 through the contact part 3 has been described in the above-described embodiments, the IC card 1 may be configured to communicate with the external device 2 through a contactless interface using a coil or the like.

In addition, although the IC card 1 is configured to include the EEPROM 8 as a rewritable nonvolatile memory in each of the above-described embodiments, the present invention is not limited thereto. For example, the IC card 1 may include a flash memory, a ferroelectric random access memory (FeRAM), or the like instead of the EEPROM 8.

Further, although examples have been described using the IC card 1 in the above-described embodiments, the present invention is not limited thereto and may be applied to portable electronic devices such as an IC tag which does not have a card shape.

According to at least one of the above-described embodiments, the IC card 1 includes the communicator 40 which performs communication with the external device 2, the authentication information storage 83 which stores authentication information for authenticating a user, and the authentication processor 53 which performs personal authentication on the basis of input information received from the external device 2 through the communicator 40 and the authentication information stored in the authentication information storage 83, and the authentication processor 53 can extend an authentication processing time until authentication can be completed again on the basis of the number of time of authentication having failed, improving convenience.

Specifically, with respect to an IC card performing contactless communication, there is a case in which an attacker holds a contactless reader/writer up in a place where an IC card of a card owner is present and performs communication with the IC card without being noticed by the owner. As a result, information may be stolen according to brute-force attack on key information or a PIN while the owner does not realize it. On the other hand, according to embodiments, it is possible to realize authentication processing in consideration of a balance between convenience and security because a time for completing authentication can be extended.

The above-described embodiments can be represented as follows.

An IC card including:
a communicator which performs communication with a terminal device;
a storage which stores authentication information for authenticating a user;
an authentication processor which performs personal authentication; and
a hardware processor which executes programs stored in the storage,
wherein the hardware processor performs the personal authentication on the basis of input information received from the terminal device through the communicator and authentication information stored in the storage, and extends an authentication processing time until authentication can be completed again on the basis of the number of times of the personal authentication having failed.

Meanwhile, a program for realizing a function of each component included in the IC card 1 in embodiments may be recorded on a computer-readable recording medium and a computer system may be caused to read and execute the program recorded on the recording medium to perform the above-described processing in each component included in the IC card 1. Here, "computer system is caused to read and execute the program recorded on the recording medium" includes "installing the program in the computer system." Here, "computer system" includes an OS and hardware such as peripheral devices.

In addition, "computer-readable recording medium" refers to portable media such as a flexible disk, a magneto-optic disk, a ROM, and a CD-ROM, and storage devices such as a hard disk embedded in a computer system.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

## Claims

1. An IC card comprising:
a communicator which performs communication with a terminal device;
a storage which stores authentication information for authenticating a user; and
an authentication processor which performs personal authentication on the basis of input information received from the terminal device through the communicator and authentication information stored in the storage,
wherein the authentication processor extends an authentication processing time until completion of authentication becomes possible again on the basis of the number of times of the personal authentication having failed.

2. The IC card according to claim 1, wherein the authentication processor extends the authentication processing time on the basis of a waiting time correlated with the number of times of successive authentication failures.

3. The IC card according to claim 2, wherein the authentication processor increases a waiting time as the number of times of successive authentication failures increases.

4. The IC card according to claim 2, wherein the authentication processor changes the waiting time correlated with the number of times of successive authentication failures on the basis of at least one of an authentication method, the strength of an encryption key and the strength of authentication information.

5. The IC card according to claim 2, further comprising a waiting time controller which changes the waiting time correlated with the number of times of successive authentication failures on the basis of a waiting time change request acquired through the communicator.

6. The IC card according to claim 2, wherein the authentication processor waits for execution of processing after the input information has been received through the communicator until the waiting time elapses.

7. The IC card according to claim 2, wherein the authentication processor waits until the waiting time elapses before causing the communicator to transmit a result of personal authentication based on the input information and the authentication information to the terminal device.

8. The IC card according to claim 2, wherein the authentication processor transmits information representing being in a waiting state to the terminal device when the authentication processor is in a waiting state when the input information has been received through the communicator.

9. The IC card according to claim 1, wherein the authentication processor increases an authentication prohibition time period if the authentication processor failed to perform personal authentication,
wherein in the authentication prohibition time period, the authentication processor is prohibited to perform personal authentication,
wherein the authentication prohibition time period starts at a time that the authentication processor failed to perform personal authentication.

10. The IC card according to claim 9, wherein the authentication processor sets the authentication prohibition time period if the authentication processor failed to perform personal authentication in the absence of the authentication prohibition time period which is set.

11. The IC card according to claim 1, wherein the authentication processor sets a first authentication prohibition time period if the authentication processor failed to perform personal authentication in the absence of the first authentication prohibition time period which is set,
wherein the authentication processor replaces the first authentication prohibition time period by a second authentication prohibition time period if the authentication processor failed to perform personal authentication in the presence of the first authentication prohibition time period which is set,
wherein the second authentication prohibition time period is longer than the first authentication prohibition time period.

12. A method of controlling an IC card including a communicator which performs communication with a terminal device, a storage which stores authentication information for authenticating a user, and an authentication processor which performs personal authentication, the method comprising:
performing the personal authentication on the basis of input information received from the terminal device through the communicator and authentication information stored in the storage; and
extending an authentication processing time until completion of authentication becomes possible again on the basis of the number of times of the personal authentication having failed.
